# EUROPÄISCHE PATENTSCHRIFT

(11) **EP 0 486 457 B1**
(45) Veröffentlichungstag und Bekanntmachung des Hinweises auf die Patenterteilung: **05.06.1996**
(21) Anmeldenummer: 91890227.1
(22) Anmeldetag: 25.09.1991
(51) Int. Cl.: A21B 3/07

(54) **Etagenbackofen**
Baking oven comprising multiple compartments
Four de boulangerie à étages

(30) Priorität: 17.10.1990 AT 2093/90
(43) Veröffentlichungstag der Anmeldung: 20.05.1992
(73) Patentinhaber: König, Elisabeth, A-8045 Graz (AT)
(72) Erfinder: König, Helmut, (DE)
(74) Vertreter: Wildhack, Helmut, Dipl.-Ing. Dr.

(56) Entgegenhaltungen:
- AT-B- 391 979
- CH-A- 347 495
- FR-A- 1 298 893
- FR-A- 1 308 430
- FR-A- 2 346 975

## Beschreibung

Die Erfindung bezieht sich auf einen Etagenbackofen, in dessen Backraum mehrere das Backgut tragende Auflagen etagenartig übereinander angeordnet sind, welche zwischen sich Backabteile bilden, deren jedes durch eine an der Frontwand des Backofens angeordnete Klappe verschließbar ist, wobei die Klappen unabhängig voneinander betätigbar sind und zur beschickung der Backabteile und bzw. oder zur Entnahme des Backgutes aus den Backabteilen eine Übergabevorrichtung vorhanden ist, die zur Ausrichtung auf ein beliebiges Backabteil höhenverstellbar und zusätzlich hiezu in horizontaler Richtung in das Backabteil einfahrbar bzw. aus diesem ausfahrbar ist und ein relativ zu einem Gestell der Übergabevorrichtung bewegliches, das Backgut tragendes Abziehband aufweist.

Solche Etagenbacköfen sind bekannt FR-A-2,346,975. Sie ermöglichen es, in den einzelnen Backabteilen unterschiedliches Backgut herzustellen, wobei dem Backgut in den einzelnen Abteilen unterschiedliche Backzeiten zugeordnet werden können. Die Übergabevorrichtung dient dazu, den Beschickungs- bzw. Entnahmevorgang des Backgutes zu automatisieren und nicht händisch in den heißen Backofen hineingreifen zu müssen. Für die Höhenverstellung der Übergabevorrichtung ist es bekannt, eine an der Frontseite des Backofens angeordnete Spindel zu verwenden, welche händisch oder vorzugsweise motorisch zur Verlagerung der Übergabevorrichtung verdreht wird. Die Horizontalbewegung der Übergabevorrichtung in das betreffende Backabteil bzw. aus diesem heraus wird häufig manuell durchgeführt, jedoch sind auch hiefür Antriebe bekannt, ebenso wie für die Bewegung bzw. Auslösung des Übergabelementes, insbesondere des Abziehbandes.

Nachteilig an den bekannten Konstruktionen ist, daß die Übergabevorrichtung, sobald sie nicht mehr benötigt wird, an der Vorderfront des Backofens im Wege steht. Zur Behebung dieses Nachteiles ist es bekannt, die Übergabevorrichtung abnehmbar auszubilden, jedoch verursacht dies Probleme in der Bedienung.

Gemäß einem älteren Vorschlag des Anmelders ist die Übergabevorrichtung an einer für alle Backabteile gemeinsamen Fronttüre des Backofens um eine vertikale Achse schwenkbar angeordnet, wobei die die Backabteile verschließenden Klappen in dieser Türe vorgesehen sind. Dadurch kann die Übergabevorrichtung zwar in einfacher Weise aus den Wege geschwrenkt werden, jedoch muß der Schwenkbereich frei sein.

Die Erfindung setzt sich zur Aufgabe, einen Etagenbackofen der eingangs geschilderten Art so zu verbessern, daß die Übergabevorrichtung bei einfacher Konstruktion und einfacher Bedienungsweise rasch aus dem Weg gebracht werden kann und bei Nichtgebrauch vor dem Backofen keinen Platz verstellt und geschützt untergebracht ist. Die Erfindung löst diese Aufgabe dadurch, daß im höhenfesten Gehäuse des Backofens ein zusätzliches, an der Rückwand des Backofens geschlossenes Abteil zur Unterbringung der Übergabevorrichtung bei Nichtgebrauch derselben vorgesehen ist, wobei zur Höhenverstellung der Übergabevorrichtung eine durch einen Motor angetriebene Spindel vorgesehen ist, welche sich bis zur Höhe dieses zusätzlichen Abteiles erstreckt, so daß die Übergabevorrichtung auch auf die Höhe dieses zusätzlichen Abteiles ausrichtbar und in dieses Abteil einschiebbar ist, welches wärmeisoliert und unbeheizt ist. Dies ermöglicht es, die Übergabevorrichtung mit geringem Aufwand und geringem zusätzlichen Platzbedarf aus dem Weg zu bringen, wenn sie weder für den Beschickungsvorgang noch für den Entnahmevorgang benötigt wird. Im zusätzlichen Abteil ist die Beschickungsvorrichtung auch gegen Beschädigungen geschützt. Der zusätzliche Platzbedarf ist gering, er erstreckt sich lediglich auf die Höhendimension des Backofens, in welcher Dimension zumeist genügend Platz zur Verfügung steht. Die Einrichtungen für die Vertikalverlagerung und die Horizontalverschiebung der Übergabevorrichtung können problemlos auch dazu verwendet werden, die Übergabevorrichtung in das zusätzliche Abteil einzubringen bzw. wieder aus diesem Abteil herauszuholen. Hiebei wird zur Höhenverstellung der Übergabevorrichtung auf die Höhe des zusätzlichen Abteiles die ohnedies vorhandene Mechanik herangezogen, wobei die durch einen Motor angetriebene Spindel, welche sich bis zur Höhe des zusätzlichen Abteiles erstreckt, eine besonders einfache, übersichtliche und betriebssichere Konstruktion bildet. Dadurch, daß das zusätzliche Abteil wärmeisoliert und unbeheizt ist, wird insbesondere während des Backvorganges eine übermäßige Erwärmung der im zusätzlichen Abteil untergebrachten Übergabevorrichtung vermieden, so daß diese Vorrichtung, sobald sie aus dem zusätzlichen Abteil wieder herausgeholt wird, problemlos auch händisch betätigt werden kann.

Aus der CH-A 347.495 ist ein Backofen bekannt, bei welchem unter den Herden desselben mindestens ein ausziehbares Tablar angeordnet ist, welches zum Ausbacken sowie auch zum Ablegen von heißen Blechen usw. dient.

Gemäß einer bevorzugten Ausführungsform der Erfindung ist das zusätzliche Abteil unter den Backabteilen angeordnet. Es befindet sich dann das zusätzliche Abteil auf einer Höhe, in welcher beim Backen nicht problemlos gearbeitet wird, sodaß dieser problematische Höhenbereich sinnvoll für die Unterbringung der Übergabevorrichtung genützt wird. Außerdem bringt diese Anordnung des zusätzlichen Abteiles Vorteile dann, wenn - wie dies zumeist der Fall ist - das Gebläse und die Heizung für die Erzeugung der für den Backvorgang benötigten Warmluft oberhalb der Backabteile angeordnet sind und zu den einzelnen Backabteilen Warmluftkanäle führen.

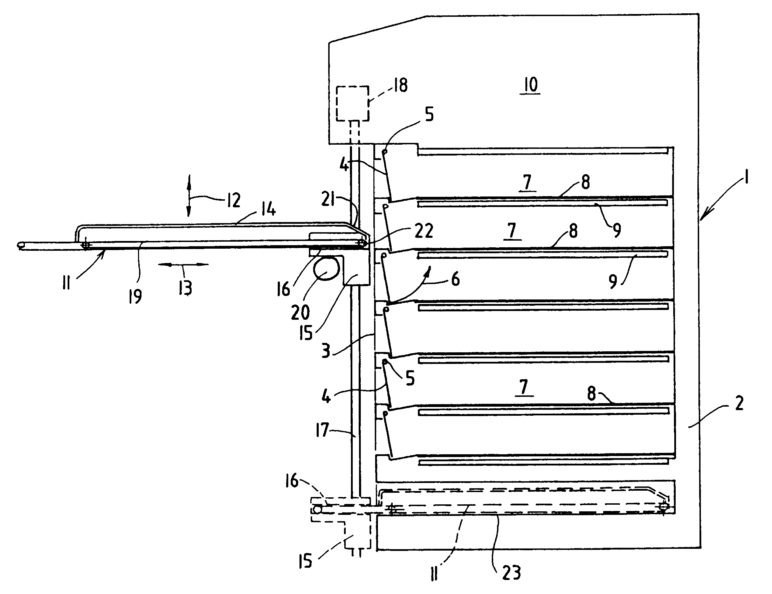

In der Zeichnung ist ein Ausführungsbeispiel des Erfindungsgegenstandes im Vertikalschnitt dargestellt.

Ein Etagenbackofen 1 hat ein Gehäuse 2, an dessen Frontwand 3 mehrere den einzelnen Etagen des Backofens 1 zugeordnete Klappen 4 vorgesehen sind, deren jede um eine horizontale Achse 5 in Richtung des Pfeiles 6 verschwenkbar ist. Jede Klappe 4 ist einem Backabteil 7 zugeordnet, welche Backabteile 7 übereinander im Gehäuse 2 angeordnet und voneinander durch das Backgut tragende Auflagen 8 getrennt sind. Unter jeder dieser Auflagen 8 liegt eine Heizvorrichtung 9, insbesondere ein warmluftdurchströmter Kanal, wobei alle diese Kanäle an seitlich des gesamten Backraumes verlaufende Verteiler- bzw. Sammelkanäle angeschlossen sind. Der großräumige Raum 10 oberhalb des von den einzelnen Backabteilen 7 gebildeten gesamten Backraumes dient zweckmäßig zur Unterbringung der Heizung und eines Gebläses.

Zur Einbringung des Backgutes in die einzelnen Backabteile 7 bzw. zum Ausbacken des fertig gebackenen Backgutes aus diesen Abteilen 7 dient eine Übergabevorrichtung 11, die sowohl in Richtung des Doppelpfeiles 12 an der Frontwand 3 des Backofens 1 höhenverstellbar als auch auf beliebiger Höhe in Richtung des Doppelpfeiles 13 horizontal verschiebbar ist, so daß diese Übergabevorrichtung 11 in ein beliebiges der Backabteile 7 eingeschoben bzw. aus diesem wieder herausgezogen werden kann. Hiezu ist die Übergabevorrichtung 11 mit ihrem Gestell 14 horizontal verschiebbar in einer Führung 16 eines Schlittens 15 geführt, der mittels einer seitlich an der Frontwand 3 des Backofens 1 angeordneten Spindel 17 höhenverstellbar ist, welche mittels eines Motors 18 verdrehbar ist, der zweckmäßig im Raum 10 untergebracht ist. Hiedurch kann die Übergabevorrichtung 11 auf die Höhe eines beliebigen Abteiles 7 ausgerichtet und in dieses Backabteil 7 eingeschoben bzw. wieder herausgezogen werden. Diese Vorgänge dienen zur Beschickung der Backabteile 7 bzw. zum Ausbringen des Backgutes aus diesen Abteilen 7. Bei der Beschickung wird die Übergabevorrichtung 11 auf die Höhe des gewünschten Backabteiles 7 gebracht und trägt das Backgut auf einem an Gestell 14 der Übergabevorrichtung 11 angeordneten Abziehapparat, welcher ein Abziehband 19 aufweist. Die Horizontalverschiebung des Gestelles 14 der Übergabevorrichtung 11 und gegebenenfalls auch die Auslösung des Abziehbandes 19 können durch einen vom Schlitten 15 getragenen Motor 20 bewirkt bzw. gesteuert werden. Beim Einschießen fährt die ganze Übergabevorrichtung 11 in Richtung des Doppelpfeiles 13 in das betreffende Backabteil 7 ein, ohne daß sich das Abziehband 19 relativ zum Gestell 14 bewegt. Eine am Gestell 14 vorne vorgesehene Schrägfläche 21 bewirkt ein sanftes Aufgleiten der Klappe 4 des Backabteiles 7, wobei die Klappe beim Einschieben der Übergabevorrichtung 11 auf der Deckfläche des Gestelles 14 gleitet. Sobald die Übergabevorrichtung 11 völlig in das Backabteil 7 eingeschoben ist, wird die Rückzugbewegung in Richtung des Pfeiles 13 eingeleitet, wobei sich das Abziehband 19 synchron zu dieser Rückzugbewegung des Gestelles 14 derart bewegt, daß das vom Abziehband 19 getragene Backgut auf die Auflage 8 des betreffenden Backabteiles 7 abgelegt wird. Beim Ausbringen ist der Vorgang umgekehrt: Während des Einschiebens der Übergabevorrichtung 11 wird das Abziehband 19 synchron zu dieser Einschubbewegung derart bewegt, daß das Backgut der Reihe nach von der Auflage 8 auf das Abziehband 19 aufgenommen wird, welches hiezu am Vorderende der Übergabevorrichtung 11 um eine Aufnehmenase 22 geführt ist.

Um nach Beendigung des Einschieß- bzw. Ausbringevorganges die Übergabevorrichtung 11 platzsparend unterbringen zu können, ist im Gehäuse 2 unterhalb des untersten Backabteiles 7 ein zusätzliches Abteil 23 vorgesehen, welche gerade so groß ist, daß die Übergabevorrichtung 11 darin Platz findet. Das zusätzliche Abteil 23 ist daher in der Regel so tief wie die Backabteile 7, jedoch hat es eine geringere Höhe und zweckmäßig auch eine geringere Breite. Es ist unbeheizt und gegenüber den darüber liegenden Backabteilen 7 wärmeisoliert, um die bei Nichtgebrauch in diesem zusätzlichen Abteil 23 untergebrachte Übergabevorrichtung 11 nicht aufzuheizen. In dieser Stellung ist die Übergabevorrichtung 11 mit strichlierten Linien dargestellt. Sie kann von der Vorderfront des Backofens aus von Hand in dieses zusätzliche Abteil 23 eingeschoben werden, welches keine Klappe 4 aufzuweisen braucht. Hiefür ist die Spindel 17 nach unten so verlängert, daß der Schlitten 15 auf eine Höhe gebracht werden kann, in welcher die Übergabevorrichtung 11 in das zusätzliche Abteil 23 eingeschoben werden kann. Günstiger ist es jedoch, auch die Einschiebung bzw. Herausnahme der Übergabevorrichtung 11 in das bzw. aus dem zusätzlichen Abteil 23 zu automatisieren, also mittels des Motors 20 durchzuführen.

Die beschriebenen Höhenverstellungen der Übergabevorrichtung 11 in Richtung des Doppelpfeiles 12 und die Horizontalverschiebung in Richtung des Doppelpfeiles 13 können von einer nicht dargestellten Steuerung aus automatisch durchgeführt werden, gegebenenfalls nach einem vorgegebenen Programm.

In der strichliert dargestellten Stellung im zusätzlichen Abteil 23 ist die Übergabevorrichtung 11 platzsparend untergebracht und stört daher bei der weiteren händischen Bedienung des Backofens nicht mehr. Anderseits ist aber diese Vorrichtung 11 ohne besondere Mühe wieder schnell einsatzbereit.

## Patentansprüche

1. Etagenbackofen, in dessen Backraum mehrere das Backgut tragende Auflagen (8) etagenartig übereinander angeordnet sind, welche zwischen sich Backabteile (7) bilden, deren jedes durch eine an der Frontwand (3) des Backofens (1) angeordnete Klappe (4) verschließbar ist, wobei die Klappen (4) unabhängig voneinander betätigbar sind und zur Beschickung der Backabteile (7) und bzw. oder zur Entnahme des Backgutes aus den Backabteilen (7) eine Übergabevorrichtung (11) vorhanden ist, die zur Ausrichtung auf ein beliebiges Backabteil (7) höhenverstellbar und zusätzlich hiezu in horizontaler Richtung in das Backabteil (7) einfahrbar bzw. aus diesem ausfahrbar ist und ein relativ zu einem Gestell der Übergabevorrichtung (11) bewegliches, das Backgut tragendes Abziehband (19) aufweist, dadurch gekennzeichnet, daß im höhenfesten Gehäuse (2) des Backofens (1) ein zusätzliches, an der Rückwand des Backofens (1) geschlossenes Abteil (23) zur Unterbringung der Übergabevorrichtung (11) bei Nichtgebrauch derselben vorgesehen ist, wobei zur Höhenverstellung der Übergabevorrichtung (11) eine durch einen Motor (8) angetriebene Spindel (17) vorgesehen ist, welche sich bis zur Höhe dieses zusätzlichen Abteiles (23) erstreckt, so daß die Übergabevorrichtung (11) auch auf die Höhe dieses zusätzlichen Abteiles (23) ausrichtbar und in dieses Abteil (23) einschiebbar ist, welches wärmeisoliert und unbeheizt ist.

2. Etagenbackofen nach Anspruch 1, dadurch gekennzeichnet, daß das zusätzliche Abteil (23) unter den Backabteilen (7) angeordnet ist.

3. Etagenbackofen nach Anspruch 1 oder 2, dadurch gekennzeichnet, daß das zusätzliche Abteil (23) eine geringere Höhe aufweist als die Backabteile (7).

## Claims

1. Story baking oven in the baking space of which a plurality of supporting shelves (9) bearing the baking material are arranged in tiers one above another, thus, forming baking compartments (7) between each other, each of them being closable by a trap door (4) arranged at the front wall (3) of the baking oven (1), wherein the trap doors (4) are actuable independently from each other, and a transfer means (11) is provided for charging the baking compartments (7) and/or for removing baking material from the baking compartments (7) which is displaceable in height for orienting it to any baking compartment (7) and, in addition, is horizontally insertable into a baking compartment (7) or is moveable out of it, and comprises a withdrawal belt (19) moveable with respect to a chassis of the transfer means (11) and bearing the baking material, characterized in that within the housing (2) of the baking oven (1) fixed in height, an additional compartment (23) closed at the back wall of the baking oven (1) is provided for accommodating the transfer means (11) when inoperative, wherein a spindle (17) driven by a motor (8) is provided for displacing the transfer means (11) in height which extends up to the level of the said additional compartment (23) so that the transfer means (11) is orientable to the level of said additional compartment (23) too and is insertable into said additional compartment (23), the latter being heat insulated and non-heated.

2. Story baking oven according to claim 1, characterized in that the additional compartment (23) is located below the baking compartments (7).

3. Story baking oven according to claim 1 or 2, characterized in that the additional compartment (23) has a smaller height than the baking compartments (7).

## Revendications

1. Four de boulangerie à étages, dans l'espace duquel une pluralité de tablettes (8) portantes le matériau à cuire et disposées en étages l'une au dessus de l'autre ainsi formants des compartiments à cuire (7), chacun de lesquelles étant à fermer par une trappe (4) située à la paroi avant (3) du four de boulangerie (1), où lesdits trappes (4) sont à actionner de manière indépendante l'une de l'autre et un dispositif de transfert (11) est prévu pour le chargement des compartiments à cuire (7) et/ou pour la reprise du matériau à cuire des compartiments à cuire (7), qui est déplaceable en hauteur pour l'orienter à un compartiment à cuire (7) quelconque et, additionellement, est mobile en direction horizontale dans le compartiment à cuire (7) ou en dehors de celui-ci, et qui comprend une bande de soutirage (19) mobile par rapport à un chassis du dispositif de transfert (11) et supportant le matériau à cuire, caractérisé en ce que dans le boîtier (2) du four de boulangerie (1) d'hauteur fixe un compartiment supplémentaire (23) fermé à la paroi arrière du four de boulangerie (1) est prévu pour le placement du dispositif de transfert (11) si il n'est pas utilisé, une broche (17) entraînée par un moteur (8) étant prévue pour le déplacement en hauteur du dispositif de transfert (11), qui s'étend jusqu'au niveau dudit compartiment supplémentaire (23) de manière que le dispositif de transfert (11) est aussi orientable au niveau dudit compartiment supplémentaire (23) et est introduisible dans ce compartiment (23), qui est isolé à la chaleur et est non réchauffé.

2. Four de boulangerie à étages selon la revendication 1, caractérisé en ce que le compartiment supplémentaire (23) est situé au dessous des compartiments à cuire (7).

3. Four de boulangerie à étages selon la revendication 1 ou 2, caractérisé en ce que le compartiment supplémentaire (23) a une hauteur plus petite que les compartiments à cuire (7).
